# EUROPÄISCHE PATENTANMELDUNG

(11) **EP 0 809 039 A1**
(43) Veröffentlichungstag der Anmeldung: **26.11.1997**
(21) Anmeldenummer: 96118808.3
(22) Anmeldetag: 23.11.1996
(51) Int. Cl.: F16F 13/14

(54) **Hülsengummifeder**

(30) Priorität: 24.05.1996 DE 19620974
(71) Anmelder: Firma Carl Freudenberg, 69469 Weinheim (DE)
(72) Erfinder: Simuttis, Arnold, Dr., 55545 Bad Kreuznach (DE)

(57) **Zusammenfassung**

Hülsengummifeder, umfassend einen inneren Stützkörper (1), der durch einen Federkörper (2) aus elastomerem Werkstoff in einem äußeren Stützkörper (3) abgestützt ist. Der innere Stützkörper (1) weist einen im wesentlichen dreieckförmigen Querschnitt auf und ist vom Federkörper (2) umfangsseitig umschlossen. Die erste (4) und die zweite Seite (5) des inneren Stützkörpers (1) sind mit jeweils einem Federsteg (7, 8) des Federkörpers (2) verbunden, wobei zumindest die Übergangsbereiche von der ersten (4) zur dritten (6) und von der zweiten (5) zur dritten Seiten (6) mit jeweils einem Anschlagpuffer (9, 10) versehen sind.

## Beschreibung

### Technisches Gebiet

Die Erfindung betrifft eine Hülsengummifeder, umfassend einen inneren Stützkörper, der durch einen Federkörper aus elastomerem Werkstoff in einem äußeren Stützkörper abgestützt ist.

### Stand der Technik

Ein solche Hülsengummifeder ist aus der DE 38 00 656 A1 bekannt. Der aus Gummi bestehende Federkörper ist stirnseitig von jeweils einer fest anvulkanisierten Stützhülse umschlossen und in der dazwischenliegenden Zone durch einen Ringkörper, der aus zwei Halbschalen besteht. Der Ringkörper und die Stützhülsen haben einen übereinstimmenden Außendurchmesser und liegen außenseitig an einer durchgehenden Zylinderfläche eines Außenrohrs der Hülsengümmifeder an. Der innere Stützkörper ist hohlzylinderförmig ausgebildet und wird vom Federkörper umfangsseitig vollständig umschlossen. In Richtung der eingeleiteten Schwingungen ist ein Anschlagpuffer vorgesehen, der einstückig ineinander übergehend mit dem Federkörper ausgebildet ist.

Der Erfindung liegt die Aufgabe zugrunde, eine solche Hülsengummifeder derart weiterzuentwickeln, daß diese zusätzlich zur Abstützung von Drehmomenten geeignet ist und gute Gebrauchseigenschaften während einer langen Gebrauchsdauer aufweist.

### Darstellung der Erfindung

Diese Aufgabe wird erfindungsgemäß mit den Merkmalen von Anspruch 1 gelöst. Auf vorteilhafte Ausgestaltungen nehmen die Unteransprüche Bezug.

Bei der erfindungsgemäßen Hülsengummifeder weist der innere Stützkörper einen im wesentlichen dreieckförmigen Querschnitt auf und ist vom Federkörper umfangsseitig umschlossen, wobei die erste und die zweite Seite des inneren Stützkörpers mit jeweils einem Federsteg des Federkörpers verbunden sind und wobei zumindest die Übergangsbereiche von der ersten zur dritten und von der zweiten zur dritten Seite mit jeweils einem Anschlagpuffer versehen sind. Hierbei ist von Vorteil, daß durch den erfindungsgemäßen Querschnitt des inneren Stützkörpers sowie die Anbindung der Federstege an den inneren Stützkörper Anschlagpuffer geschaffen werden, die mit Gegenanschlagflächen der Hülsengummifeder in Berührung gelangen, wenn große Drehmomente eingeleitet werden. Die mechanische Belastung auf den Federkörper wird durch die am inneren Stützkörper angeordneten Anschlagpuffer derart begrenzt, daß die beanspruchte Hülsengummifeder gleichbleibend gute Gebrauchseigenschaften während einer sehr langen Gebrauchsdauer aufweist.

Momente wirken beispielsweise dann auf die Hülsengummifeder, wenn diese zur Lagerung einer quer eingebauten Motor-Getriebe-Einheit zur Anwendung gelangt. Die Achse der Hülsengummifeder erstreckt sich in diesem Fall im wesentlichen parallel zur Kurbelwelle der Verbrennungskraftmaschine und im wesentlichen quer zur Fahrtrichtung. Bei extremer Beschleunigen oder starken Lastwechseln bewegt sich der innere Stützkörper relativ zum äußeren Stützkörper bogenförmig, bis sich einer der Anschlagpuffer an einer Gegenanschlagfläche abstützt. Eine Überdehnung durch unzulässig hohe Belastungen des Federkörpers auf Zug ist daher ausgeschlossen.

Die erste und die zweite Seite können jeweils eine - im Querschnitt betrachtet - konkav gewölbte Oberfläche aufweisen. Die Federstege sind an der konkav gewölbten Oberfläche befestigt. Durch die Wölbung ist die Fläche - bezogen auf eben ausgebildete Oberflächen des inneren Stützkörpers - relativ vergrößert, so daß sich auch bei Einleitung von Drehmomenten in die Hülsengummifeder eine außerordentlich haltbare Befestigung zwischen dem Federkörper und dem inneren Stützkörper ergibt.

Die dritte Seite kann einen sich in radialer Richtung erstreckenden weiteren Anschlagpuffer aufweisen. Extreme Auslenkbewegungen des inneren Stützkörpers in bezug auf den äußeren Stützkörper in radialer Richtung können dadurch begrenzt werden.

Der Federkörper, die Anschlagpuffer und der weitere Anschlagpuffer sind bevorzugt einstückig ineinander übergehend und materialeinheitlich ausgebildet. Die Hülsengummifeder weist dadurch einen einfachen Aufbau auf, ist einfach montierbar und kostengünstig herstellbar. Der innere Stützkörper ist außenumfangsseitig vollständig vom Federelement umschlossen.

Die Hülsengummifeder ist bevorzugt hydraulisch dämpfend, wobei der innere Stützkörper von einem Fensterrohr mit radialem Abstand umschlossen ist und wobei in dem durch den Abstand gebildeten Spalt der Federkörper angeordnet ist, der den inneren Stützkörper und das Fensterrohr miteinander verbindet, wobei das Fensterrohr vom äußeren Stützkörper flüssigkeitsdicht umschlossen ist und mit diesem einen Dämpfungskanal begrenzt, der eine mit Dämpfungsflüssigkeit gefüllte Arbeitskammer und eine Ausgleichskammer flüssigkeitsleitend verbindet. Eine derartige Hülsengummifeder weist ausgezeichnete Dämpfungseigenschaften auf. Bei Relativverlagerungen des inneren Stützkörpers bezogen auf das mit dem äußeren Stützkörper relativ ortsfest verbundene Fensterrohr ergibt sich eine Verlagerung von Dämpfungsflüssigkeit aus der Arbeitskammer durch den Dämpfungskanal in die Ausgleichskammer, die geeignet ist, im wesentlichen drucklos das aus der Arbeitskammer verdrängte Flüssigkeitsvolumen aufzunehmen.

### Kurzbeschreibung der Zeichnung

Ein Ausführungsbeispiel der erfindungsgemäßen Hülsengummifeder wird nachfolgend anhand der Zeichnungen näher erläutert.

Diese zeigen:
Figur 1 einen Querschnitt durch ein Ausführungsbeispiel der erfindungsgemäßen Hülsengummifeder.
Figur 2 einen Schnitt durch die Hülsengummifeder aus Figur 1 entlang der Linie A-A.
Figur 3 einen Schnitt durch die Hülsengummifeder aus Figur 1 entlang der Linie B-B.

### Ausführung der Erfindung

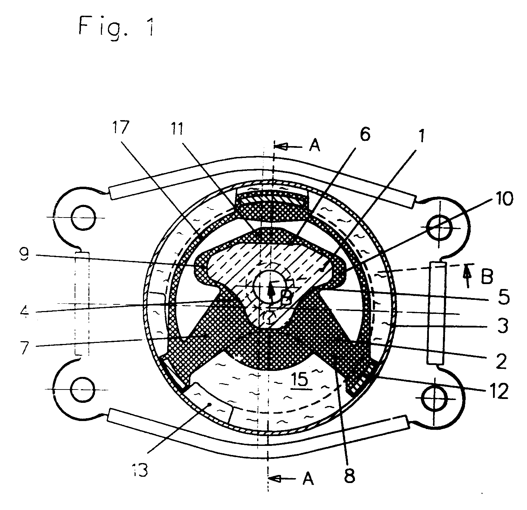

In den Figuren 1 bis 3 ist ein Ausführungsbeispiel einer erfindungsgemäßen Hülsengummifeder gezeigt, die eine Arbeitskammer 15 und eine Ausgleichskammer 16 umfaßt, die mit Dämpfungsflüssigkeit 14 gefüllt und durch den Dämpfungskanal 13 flüssigkeitsleitend miteinander verbunden sind. Die Arbeitskammer 15 ist - im Querschnitt nach Figur 1 - im wesentlichen dreieckförmig ausgebildet und durch den äußeren Stützkörper 3 sowie die beiden Federstege 7, 8 des Federkörpers 2 begrenzt.

In Figur 1 weist der innere Stützkörper 1 einen im wesentlichen dreieckförmigen Querschnitt auf und ist vom Federkörper 2 außenumfangsseitig vollständig umschlossen. Die erste 4 und die zweite Seite 5 des inneren Stützkörpers 1 sind jeweils konkav gewölbt und durch Vulkanisation mit den Federstegen 7, 8 des Federkörpers 2 verbunden. In den Übergangsbereichen von der ersten 4 zur dritten 6 und von der zweiten 5 zur dritten Seite 6 ist jeweils ein Anschlagpuffer 9, 10 vorgesehen, wobei die beiden Anschlagpuffer 9, 10 bei Einleitung von Momenten mit der angrenzenden elastischen Kammerwand 17 der Ausgleichskammer 16 in Berührung bringbar sind.

Eine derartige Anschlagberührung bedingt eine Verformung der elastischen Kammerwand 17 und eine Verlagerung von Flüssigkeitsbestandteilen aus der Ausgleichskammer 16 durch den Dämpfungskanal 13 in die Arbeitskammer 15. Dadurch wird eine ausgezeichnete Dämpfung der eingeleiteten Bewegung bewirkt.

Bei Einleitung extremer Schwingungen in radialer Richtung nähern sich in diesem Ausführungsbeispiel sowohl der weitere Anschlagpuffer 11 als auch der erste und der zweite Anschlagpuffer 9, 10 an die elastische Kammerwand 17 an und gelangen zur Begrenzung der extremen Auslenkbewegungen mit dieser in Berührung. Durch die Anschlagpuffer 9, 10 und den weiteren Anschlagpuffer 11 werden die mechanischen Belastungen auf den Federkörper 2 begrenzt; gebrauchsdauerverringernde Zugspannungen innerhalb des elastomeren Werkstoffs des Federkörpers werden verhindert und die Gebrauchsdauer der gesamten Hülsengummifeder dadurch erhöht.

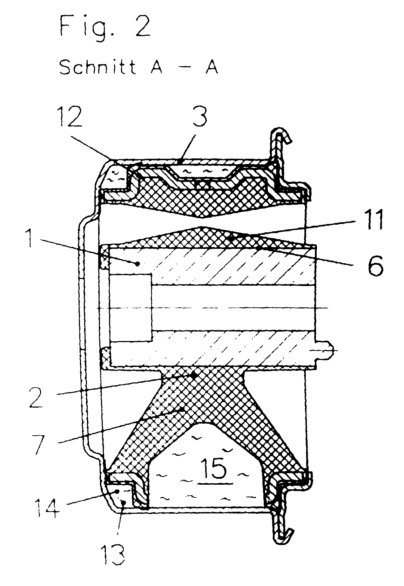

In Figur 2 ist ein Schnitt A-A aus Figur 1 gezeigt. Die Arbeitskammer 15 ist durch den Dämpfungskanal 13 flüssigkeitsleitend mit der Ausgleichskammer 16 verbunden. In Figur 2 ist der weitere Anschlagpuffer 11 zur Begrenzung radialer Relativverlagerungen des inneren Stützkörpers 1 bezogen auf den äußeren Stützkörper 3 gezeigt.

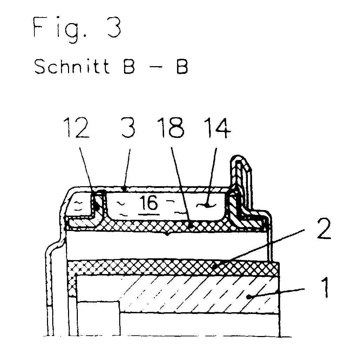

In Figur 3 ist der Schnitt B-B aus Figur 1 dargestellt. In diesem Schnitt ist die elastische Kammerwand 17 zu erkennen, die die Ausgleichskammer 16 begrenzt, wobei die Ausgleichskammer 16 mit Dämpfungsflüssigkeit 14 gefüllt ist. Das Fensterrohr 12, das durch den Federkörper 2 mit dem inneren Stützkörper 1 verbunden ist, ist radial außenseitig vom äußeren Stützkörper 3 flüssigkeitsdicht umschlossen.

## Patentansprüche

1. Hülsengummifeder, umfassend einen inneren Stützkörper, der durch einen Federkörper aus elastomerem Werkstoff in einem äußeren Stützkörper abgestützt ist, **dadurch gekennzeichnet**, daß der innere Stützkörper (1) einen im wesentlichen dreieckförmigen Querschnitt aufweist und vom Federkörper (2) umfangsseitig umschlossen ist, daß die erste (4) und die zweite Seite (5) des inneren Stützkörpers (1) mit jeweils einem Federsteg (7, 8) des Federkörpers (2) verbunden sind und daß zumindest die Übergangsbereiche von der ersten (4) zur dritten (6) und von der zweiten (5) zur dritten Seiten (6) mit jeweils einem Anschlagpuffer (9, 10) versehen sind.

2. Hülsengummifeder nach Anspruch 1, dadurch gekennzeichnet, daß die erste (4) und die zweite Seite (5) jeweils eine - im Querschnitt betrachtet - konkav gewölbte Oberfläche aufweisen

3. Hülsengummifeder nach einem der Ansprüche 1 oder 2, dadurch gekennzeichnet, daß die dritte Seite (6) einen sich in radialer Richtung erstreckenden weiteren Anschlagpuffer (11) aufweist.

4. Hülsengummifeder nach einem der Ansprüche 1 bis 3, dadurch gekennzeichnet, daß der Federkörper (2), die Anschlagpuffer (9, 10) und der weitere Anschlagpuffer (11) einstückig ineinander übergehend und materialeinheitlich ausgebildet sind.

5. Hülsengummifeder nach einem der Ansprüche 1 bis 4, dadurch gekennzeichnet, daß der innere Stützkörper (1) von einem Fensterrohr (12) mit radialem Abstand umschlossen ist, wobei in dem durch den Abstand gebildeten Spalt der Federkörper (2) angeordnet ist, der den inneren Stützkörper (1) und das Fensterrohr (12) miteinander verbindet, wobei das Fensterrohr (12) vom äußeren Stützkörper (3) flüssigkeitsdicht umschlossen ist und mit diesem einen Dämpfungskanal (13) begrenzt, der eine mit Dämpfungsflüssigkeit (14) gefüllte Arbeitskammer (15) und eine Ausgleichskammer (16) flüssigkeitsleitend verbindet.
